## Europäisches Patentamt
## European Patent Office
## Office européen des brevets

(19)

(11) Veröffentlichungsnummer: **0 105 177**
**B1**

(12)

# EUROPÄISCHE PATENTSCHRIFT

(45) Veröffentlichungstag der Patentschrift:
**29.03.89**

(21) Anmeldenummer: **83108369.6**

(22) Anmeldetag: **25.08.83**

(51) Int. Cl.⁴: **G 02 B 6/26**

(54) **Optisches Koppelglied.**

(30) Priorität: **03.09.82 DE 3232793**

(43) Veröffentlichungstag der Anmeldung:
**11.04.84 Patentblatt 84/15**

(45) Bekanntmachung des Hinweises auf die Patenterteilung:
**29.03.89 Patentblatt 89/13**

(84) Benannte Vertragsstaaten:
**CH DE FR GB IT LI SE**

(56) Entgegenhaltungen:
**EP-A-0 043 450**
**DE-A-2 916 234**
**DE-A-2 933 245**
**US-A-4 268 756**
**US-A-4 327 963**

**Patent Abstracts of Japan Band 6, Nr. 162, 25.**
**August 1982 & JP-A-57-81227**
**FIJITSU SCIENTIFIC & TECHNICAL JOURNAL,**
**Band 16, Nr. 4, 1980 K. MIYAZAKI et al. "Optical**
**multiplexer/demultiplexers using thin-film optical**
**filters", Seiten 17-36**
**ELECTRONIC ENGINEERING, Band 53, Nr. 647, 1981**
**"Product focus", Seiten 68-74**
**PROC. OF THE NAT. ELECTR. CONF., Band 33, 1979**
**A. ALBANESE "Arrays of electro-optical interfaces**
**for optical data links", Seiten 185-187**

(73) Patentinhaber: **Licentia Patent- Verwaltungs- GmbH,**
**Theodor- Stern- Kai 1, D-6000 Frankfurt/Main 70**
**(DE)**
Patentinhaber: **ANT Nachrichtentechnik GmbH,**
**Gerberstrasse 33, D-7150 Backnang (DE)**

(72) Erfinder: **Weidel, Edgar, Dipl.- Phys.,**
**Hudlerstrasse 25, D-7913 Senden (DE)**

(74) Vertreter: **Amersbach, Werner, Dipl.- Ing., Licentia**
**Patent- Verwaltungs- GmbH Theodor- Stern- Kai**
**1, D-6000 Frankfurt 70 (DE)**

EP 0 105 177 B1

## Beschreibung

Die Erfindung betrifft ein optisches Koppelglied nach dem Oberbegriff des Patentanspruchs 1.

Ein derartiges Koppelglied ist insbesondere anwendbar für optische Nachrichtenübertragungssysteme, die im Wellenlängenduplex- oder im Wellenlängenmultiplexbetrieb arbeiten. Ein derartiges System hat den Vorteil, daß beispielsweise bei einem gleichzeitigen Gegensprechverkehr über eine größere Entfernung, z. B. einige Kilometer, lediglich ein einziger Lichtwellenleiter benötigt wird.

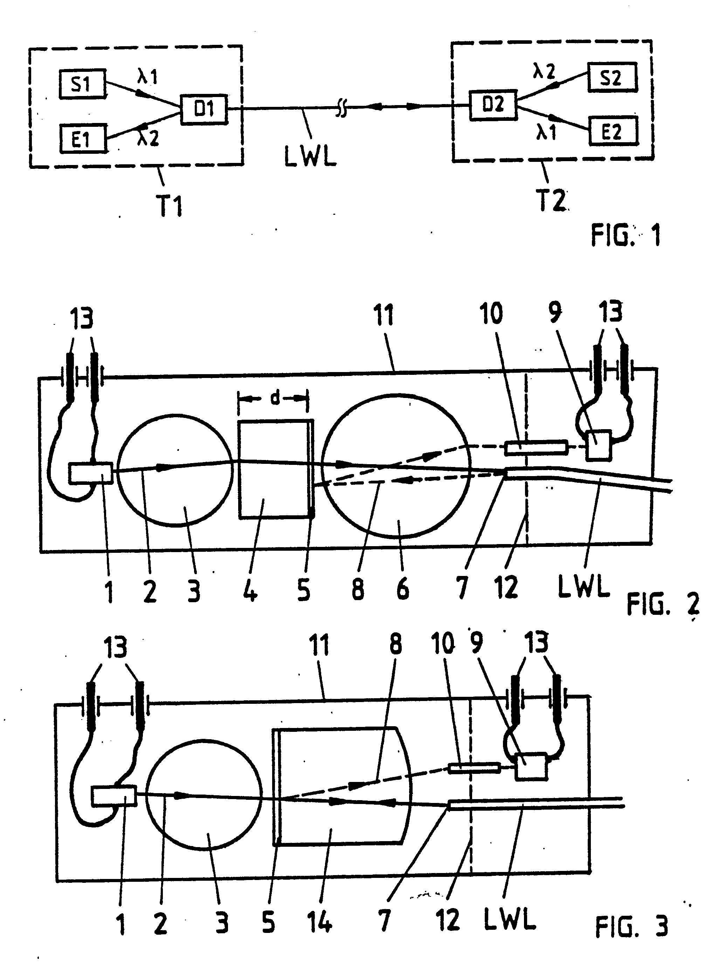

FIG. 1 zeigt ein derartiges System für zwei Sendeund/oder Empfangsstationen T1 bzw. T2, die durch einen Lichtwellenleiter LWL optisch gekoppelt sind. Jede Sende- und/oder Empfangsstation besteht aus einem Sender S1 bzw. S2, z. B. Halbleiterlasern, die Strahlung unterschiedlicher Wellenlänge $\lambda$1 bzw. $\lambda$2 aussenden, einem Empfänger E1 bzw. E2, z. B. Photodioden, sowie einem wellenlängenabhängigen Koppelglied, einem Duplexer D1 bzw. D2, das den Sender und den Empfänger einer Sende- und/oder Empfangsstation an den Lichtwellenleiter koppelt. Ein derartiges Koppelglied bewirkt, daß das in dem Lichtwellenleiter LWL in entgegengesetzten Richtungen übertragene Strahlungsgemisch an den gewünschten Empfänger gelangt und daß keine unerwünschte Strahlung an die Sonder gelangt. Beispielsweise gelangt die von dem Sender S1 ausgesandte Strahlung der Wellenlänge $\lambda$1 lediglich an den Empfänger E2. Dieser Strahlengang ist durch Pfeile dargestellt.

Eine derartige Anordnung ist in nachteiliger Weise unwirtschaftlich, denn in einer Sende- und/oder Empfangsstation sind Sender, Empfänger sowie Duplexer einzelne Bauelemente, die durch optische Wege, z. B. Lichtwellenleiter, gekoppelt sind. Eine derartige Kopplung erfordert zeit- und kostenaufwendige Justier- und Montagearbeiten. Außerdem entstehen hohe optische Verluste, da zwischen den Bauelementen und den optischen Wegen viele optische Koppelstellen vorhanden sind, z. B. Spleiße.

Aus der DE-A-2 933 245 ist es weiterhin bekannt, als wellenlängenabhängiges Koppelglied (Duplexer) zwei Gradientenstablinsen zu verwenden, zwischen denen sich ein wellenlängenabhängiges Filter befindet.

An den anderen Endflächen der Gradientenstablinsen sind der Ein-Ausgangslichtwellenleiter, der Halbleitersender und der Halbleiterempfänger über weitere Lichtwellenleiter angekoppelt.

Eine derartige Anordnung hat den Nachteil, daß in unwirtschaftlicher Weise sehr viele Koppelstellen, die kostenungünsitge Justiervorgänge erfordern und außerdem zu störenden Koppelverlusten beitragen, erforderlich sind. 8eispielsweise müssen der Halbleitersender sowie der Halbleiterempfänger zunächst mit jeweils einem kurzen Lichtwellenleiter möglichst verlustfrei verkoppelt werden. Die jeweils anderen Enden der kurzen Lichtwellenleiter sowie der Ein-Ausgangslichtwellenleiter werden dann mit dem wellenlängenabhängigen Koppelglied verkoppelt. Diese Koppelstellen erfordern einen erheblichen Justieraufwand. Zur Vermeidung von optischen Koppelverlusten ist ferner in nachteiliger Weise ein optischer Koppelkitt erforderlich. Dieser Koppelkitt kann in unkontrollierbarer Weise altern, so daß im Laufe der Zeit zusätzliche unerwünschte Koppelverluste entstehen.

Aufgabe der Erfindung ist es, ein kostengünstig herstellbares gattungsgemäßes Koppelglied anzugeben, das außerdem mechanisch kompakt und störungsunempfindlich ist.

Diese Aufgabe wird gelöst durch die im kennzeichnenden Teil des Patentanspruchs 1 angegebenen Merkmale.

Ausgestaltungen und Weiterbildungen der Erfindung sind den Unteransprüchen entnehmbar.

Ein Vorteil der Erfindung besteht darin, daß die Mikrooptik eine optimale Anpassung von Sender und/oder Empfänger an den Lichtwellenleiter ermöglicht.

Die Erfindung wird im folgenden anhand von Ausführungsbeispielen unter Bezugnahme auf schematische Zeichnungen näher erläutert.

FIG. 2 und 3 zeigen Ausführungsbeispiele.

Die in dieser Schrift verwendete Bezeichnung "Mikrooptik" bezieht sich auf eine optische Anordnung, die aus geometrisch kleinen optischen Bauelementen besteht, z. B. Linsen mit einem Durchmesser von einigen Millimetern.

FIG. 2 zeigt ein Koppelglied, bei dem die Mikrooptik kugelförmige Linsen enthält. Von einem Sender 1, z. B. einem Halbleiterlaser, ausgesandte Strahlung 2, z. B. Licht mit einer Wellenlänge $\lambda$1 von ungefähr 830 nm, wird durch eine erste Kugellinse 3 und eine im wesentlichen planparallele Platte 4 in ein kollimiertes erstes Strahlenbündel umgewandelt. Dieses Strahlenbündel durchdringt im wesentlichen verlustfrei eine wellenlängenabhängig reflektierende Planfläche 5, z. B. ein auf die Platte 4 aufgedampftes dielektrisches Interferenzfilter oder ein Beugungsgitter, und wird dann durch eine zweite Kugellinse 6 in die Stirnfläche 7 des Lichtwellenleiters LWL eingekoppelt. Aus der Stirnfläche 7 austretende Strahlung 8, z. B. Licht mit einer Wellenlänge $\lambda$2, die wesentlich größer ist als die Wellenlänge $\lambda$1, wird durch die zweite Kugellinse 6 in ein kollimiertes zweites Strahlenbündel umgewandelt. Dieses wird durch die Planfläche 5 im wesentlichen vollständig reflektiert und durch die zweite Kugellinse 6 dem Empfänger 9, z. B. einer Halbleiterfotodiode, zugeleitet. Es ist möglich, im optischen Strahlengang vor dem Empfänger 9 ein optisches Filter 10 anzuordnen, z. B. ein einige Millimeter langer Lichtwellenleiter, auf dessen einer Stirnfläche eine Filterschicht aufgebracht ist, die lediglich für Licht der Wellenlänge λ2 durchlässig ist. Durch ein derartiges Filter 10 wird eine räumliche und wellenlängenabhängige Filterung der Strahlung erreicht, so daß mögliche Störungen durch Streulicht, z. B. durch die vom Sender 1 ausgesandte Strahlung, vermieden werden. Durch eine entsprechende Wahl der optisch wirksamen Größen, z. B. der Dicke d der Platte 4 und/oder der Radien der Kugellinsen 3, 6, ist es in vorteilhafter Weise möglich, den optischen Strahlengang so zu gestalten, daß möglichst geringe optische Verluste auftreten. Beispielsweise ist es möglich, unterschiedliche Aperturen des Senders, des Empfängers und des Lichtwellenleiters aneinander anzupassen.

Die beschriebene optische Anordnung ist in einem kompakten und störungsunempfindlichen Gehäuse 11 angeordnet, z. B. einem würfelförmigen Kupferblock mit einer Kantenlänge von ungefähr 10 mm. Ein derartiges Gehäuse 11 ist als Wärmesenke für den Sender 1 nutzbar. Innerhalb des Gehäuses ist außerdem eine Abschirmung 12 vorhanden, die eine elektrische und/oder elektromagnetiache Trennung zwischen Sender 1 und Empfänger 9 bewirkt, so daß ein störendes elektrisches und/oder elektromagnetisches Übersprechen vermieden wird. An dem Gehäuse 11 sind außerdem elektrische Anschlüsse 13 angebracht, z. B. elektrisch isolierte Stifte, die innerhalb des Gehäuses 11 elektrisch mit dem Sender sowie dem Empfänger 9 verbunden sind. Ein derartiges Koppelglied ist auf kostengünstige Weise in eine nicht dargestellte elektrische Leiterplatte einlötbar. Weiterhin ist es möglich, im Gehäuse 11 nicht dargestellte elektrische Bauelemente, z. B. einen Vorverstärker für den Empfänger 9, anzuordnen. Der in FIG. 2 dargestellte Lichtwellenleiter LWL ist durch eine optische Spleiß- und/oder Steckverbindung nahezu beliebig verlängerbar. Besteht die aus der Stirnfläche 7 austretende Strahlung 8 aus einem Wellenlängengemisch, so ist es möglich, die reflektierende Planfläche 5 als Beugungsgitter auszubilden, das mehrere Strahlenbündel erzeugt, die einer entsprechenden Anzahl von Empfängern 9 zugeführt werden. Ein derartiges Koppelglied ermöglicht den Empfang mehrerer optischer Nachrichtenübertragungskanäle.

FIG. 3 zeigt ein weiteres Ausführungsbeispiel, bei dem die Mikrooptik lediglich aus zwei optischen Bauelementen besteht, einer Kugellinse 3 und einer Plankonvexlinse 14, an deren planer Seite die wellenlängenabhängig reflektierende Planfläche 5 angebracht ist. Die übrigen Bezugszeichen sowie der Strahlengang entsprechen denjenigen der FIG. 2.

**Patentansprüche**

1. Optisches Koppelglied, bestehend aus einem elektrooptischen Halbleitersender (1) einem optoelektrischen Halbleiterempfänger (9) sowie einer Mikrooptik (3) das heißt, eine optische Anordnung, die aus geometrisch kleinen optischen Bauelementen besteht, z. B. Linsen mit einem Durchmesser von einigen Millimetern,
- welche aus der Strahlung des Halbleitersenders ein kollimiertes erstes Strahlenbündel erzeugt, das ein planes, wellenlängenabhängiges Filter (5) durchdringt und von der Mikrooptik im wesentlichen verlustfrei in eine Stirnfläche (7) eines Lichtwellenleiters, in dem Strahlung unterschiedlicher Wellenlängen Übertragbar ist, eingekoppelt wird und
- welche aus der Strahlung, die aus der Stirnfläche (7) des Lichtwellenleiters austritt, ein kollimiertes zweites Strahlenbünde erzeugt, das durch das wellenlängenabhängige Filter (5) im wesentlichen verlustfrei reflektiert und danach durch die Mikrooptik dem Halbleiterempfänger (9) zugeleitet wird, dadurch gekennzeichnet,
- daß die Mikrooptik mindestens eine Kugellinse (3) enthält,
- daß die von dem Halbleitersender (1) ausgesandte Strahlung (2) unmittelbar auf die Kugellinse (3) gelangt, welche das erste kollimierte Strahlenbündel erzeugt, und
- daß der Halbleitersender (1), der Halbleiterempfänger (9), die Mikrooptik sowie ein Teil des Lichtwellenleiters (LWL) in einem elektrisch und/oder elektromagnesisch abschirmbaren Gehäuse (11) angeordnet sind.

2. Koppelglied nach Anspruch 1, dadurch gekennzeichnet, daß die Mikrooptik aus zwei Kugellinsen (3, 6) besteht, zwischen denen eine planparallele Platte (4) angeordnet ist, auf deren dem Halbleitersender (1) abgewandten Seite sich das wellenlängenabhängige Filter (5) befindet (Fig. 2).

3. Koppelglied nach Anspruch 1, dadurch gekennzeichnet,
- daß die Mikrooptik aus einer Kugellinse (3) und einer Plankonvexlinse (14) besteht, deren plane Seite der Kugellinse (3) zugewandt ist und auf deren planer Seite sich das wellenlängenabhängige Filter (5) befindet, und
- daß die Kugellinse (3) dem Halbleitersender (1) zugewandt ist (Fig. 3).

4. Koppelglied nach einem der vorhergehenden Ansprüche, dadurch gekennzeichnet, daß dem Halbleiterempfänger (9) mindestens ein räumlich und/oder wellenlängenabhängig wirkendes optisches Filter (10) vorgekoppelt ist.

5. Koppelglied nach Anspruch 4, dadurch gekennzeichnet, daß das Filter (10) eine optische Faser enthält.

6. Koppelglied nach einem der vorhergehenden Ansprüche, dadurch gekennzeichnet, daß die reflektierende Planfläche (5) aus einem dielektrischen Spiegel und/oder einem Beugungsgitter besteht.

7. Koppelglied nach Anspruch 6, dadurch gekennzeichnet, daß Halbleitersender (1) und/oder Empfänger (9) als hybride Halbleiterbauelemente ausgebildet sind.

8. Koppelglied nach Anspruch 7 oder Anspruch 8, dadurch gekennzeichnet, daß in dem Gehäuse (11) eine Abschirmung (12) vorhanden ist, die eine elektrische und/oder elektromagnetische Trennung zwischen Halbleitersender (1) und Halbleiterempfänger (9) bewirkt.

9. Koppelglied nach einem der vorhergehenden Ansprüche, dadurch gekennzeichnet, daß das Gehäuse (11) als Wärmesenke für den Halbleitersender (1) ausgebildet ist.

10. Koppelglied nach einem der vorhergehenden Ansprüche, dadurch gekennzeichnet, daß an dem Gehäuse (11) mindestens ein elektrischer Anschluß (13) vorhanden ist und daß das Gehäuse (11) derart gestaltet ist, daß eine elektrische und/oder mechanische Verbindung mit einer elektrischen Leiterplatte möglich ist.

11. Koppelglied nach einem der vorhergehenden Ansprüche, dadurch gekennzeichnet, daß in dem Gehäuse (11) mindestens ein Empfängs- und/oder Sendeverstärker vorhanden ist.

12. Koppelglied nach einem der vorhergehenden Ansprüche, dadurch gekennzeichnet, daß der Lichtwellenleiter (LWL) durch eine optische Spleiß- oder Steckverbindung verlärngerbar ist.


**Claims**

1. Optical coupling member consisting of an electro-optical semiconductor transmitter (1), an electro-optical semiconductor receiver (9) as well as of a micro-optical system (3), i.e. an optical arrangement which consists of geometrically small optical components, for example lenses of a diameter of a few millimetres,
- which from the radiation of the semiconductor transmitter produces a first collimated beam which penetrates a planar wave-length-dependent filter (5) and is coupled substantially free of loss by the micro-optical system into an end face (7) of an optical conductor, in which radiation of different wave-lengths is transmissible and
- which from the radiation which issues from the end face (7) of the optical conductor produces a second collimated beam which is reflected substantially free of loss by the wave-length-dependent filter (5) and thereafter conducted by the micro-optical system to the semiconductor receiver (9),
characterised thereby,
- that the micro-optical system contains at least one spherical lens (3), that the radiation (2) emitted by the semiconductor transmitter (1) gets directly to the spherical lens (3), which generates the first collimated beam, and
- that the semiconductor transmitter (1), the semiconductor receiver (9), the micro-optical system as well as a part of the optical conductor (LWL) are arranged in an electrically and/or electromagnetically screenable housing (11).

2. Coupling member according to claim 1, characterised thereby, that the micro-optical system consists of two spherical lenses (3,6), between which a plate (4) with planar parallel faces is arranged, on the side of which remote from the semiconductor transmitter (1) the wave-length-dependent filter (5) is disposed (Fig. 2).

3. Coupling member according to claim 1, characterised thereby,
- that the micro-optical system consists of a spherical lens (3) and a planoconvex lens (14), the planar side of which faces the spherical lens (3) and on the planar side of which the wave-lengthdependent filter (5) is disposed, and
- that the spherical lens (3) faces the semiconductor transmitter (1) (Fig. 3).

4. Coupling member according to one of the preceding claims, characterised thereby, that at least one optical filter (10), which acts spatially and/or in dependence on wave-length, is coupled in front of the semiconductor receiver (9).

5. Coupling member according to claim 4, characterised thereby, that the filter (10) contains an optical fibre.

6. Coupling member according to one of the preceding claims, characterised thereby, that the reflecting planar surface (5) consists of a dielectric mirror and/or a diffraction grating.

7. Coupling member according to claim 6, characterised thereby, that semiconductor transmitter (1) and/or receiver (9) are constructed as hybrid semiconductor components.

8. Coupling member according to claim 7 or claim 8, characterised thereby, that a screening (12), which effects an electrical and/or electromagnetic separation between semiconductor transmitter (1) and semiconductor receiver (9), is present in the housing (11).

9. Coupling member according to one of the preceding claims, characterised thereby, that the housing (11) is constructed as heat sink for the semiconductor transmitter (1).

10. Coupling member according to one of the preceding claims, characterised thereby, that at least one electrical connection (13) is present at the housing (11) and that the housing (11) is structured in such a manner that an electrical and/or mechanical connection with an electrical conductor plate is possible.

11. Coupling member according to one of the preceding claims, characterised thereby, that at least one reception and/or transmission amplifier is present in the housing (11).

12. Coupling member according to one of the preceding claims, characterised thereby, that the optical conductor (LWL) is prolongable by an optical spliced or plug connection.

## Revendications

1. Elément de couplage optique constitué par un électro-optique à semi-conducteurs (1), par un récepteur opto-électrique à semi-conducteurs (9) et par une micro-optique (3), autrement dit, par une disposition optique constituée par des éléments optiques géométriquement petits, tels que des lentilles d'un diamètre de quelques millimètres,
- qui produit, à partir du rayonnement de l'émetteur à semi-conducteurs, un premier faisceau de rayons rendus parallèles, qui traverse un filtre plan (5) dépendant de la longueur d'onde et qui est introduit par la micro-optique dans une face frontale (7) d'un guide d'ondes lumineuses dans lequel peut être transmis un rayonnement de différentes longueurs d'ondes, et
- qui, à partir du rayonnement sortant de la face frontale (7) du guide d'ondes lumineuses, produit un deuxième faisceau de rayons rendus parallèles qui sont réfléchis sensiblement sans perte par le filtre (5) dépendant de la longueur d'onde et sont ensuite amenés par la micro-optique au récepteur à semi-conducteurs (9), caractérisé en ce que
- la micro-optique comprend au moins une lentille sphérique (3),
- le rayonnement (2) émis par l'émetteur à semi-conducteurs (1) atteint directement la lentille sphérique (3) qui produit le premier faisceau de rayons rendus parallèles, et l'émetteur à semi-conducteurs (1), le récepteur à semi-conducteurs (9), la micro-optique et une partie du guide d'ondes lumineuses (LWL) sont disposés dans un boîtier (11) susceptible de protection dans le domaine électrique et/ou électromagnétique.

2. Elément de couplage selon la revendication 1, caractérisé en ce que la micro-optique est constituée par deux lentilles sphériques (3, 6) entre lesquelles est disposée une lame (4) à faces planes et parallèles, sur la face opposée à l'émetteur à semi-conducteurs (1) de laquelle se trouve le filtre (5) dépendant de la longueur d'onde (figure 2).

3. Elément de couplage selon la revendication 1, caractérisé en ce que
- la micro-optique est constituée par une lentille sphérique (3) et par une lentille plan-convexe (14) dont la face plane est tournée vers la lentille sphérique (3) et sur la face plane de laquelle se trouve le filtre (5) dépendant de la longueur d'onde, et
- en ce que la lentille sphérique (3) est tournée vers l'émetteur à semi-conducteurs (1), (figure 3).

4. Elément de couplage selon l'une des revendications qui précèdent, caractérisé en ce qu'au moins un filtre optique (10) opérant spatialement et/ou en fonction de la longueur d'onde est couplé au récepteur à semi-conducteurs (9), en amont de celui-ci.

5. Elément de couplage selon la revendication 4, caractérisé en ce que le filtre (10) comporte une fibre optique.

6. Elément de couplage selon l'une des revendications qui précèdent, caractérisé en ce que la surface plane réfléchissante (5) est constituée par un miroir diélectrique et/ou un réseau à diffraction.

7. Elément de couplage selon la revendication 6, caractérisé en ce que l'émetteur à semi-conducteurs (1) et/ou le récepteur (9) sont réalisés sous forme de composants à semi-conducteurs hybrides.

8. Elément de couplage selon la revendication 7 ou la revendication 8, caractérisé en ce que le boîtier (11) comporte un écran (12) qui opère une séparation électrique et/ou électromagnétique entre l'émetteur à semi-conducteurs (1) et le récepteur à semi-conducteurs (9).

9. Elément de couplage selon l'une des revendications qui précèdent, caractérisé en ce que le boîtier (11) est réalisé sous forme d'un absorbeur de chaleur pour l'émetteur à semi-conducteurs (1).

10. Elément de couplage selon l'une des revendications qui précèdent, caractérisé en ce qu'il existe sur le boîtier (11) au moins une connexion électrique (13) et en ce que le boîtier (11) est constitué de telle sorte que son raccordement électrique et/ou mécanique à une plaquette de circuits imprimés soit possible.

11. Elément de couplage selon l'une des revendications qui précèdent, caractérisé en ce que dans le boîtier (11) se trouve au moins un amplificateur de réception et/ou d'émission.

12. Elément de couplage selon l'une des revendications qui précèdent, caractérisé en ce que le guide d'ondes lumineuses (LWL) peut être rallongé au moyen d'une liaison optique par épissure ou par connexion enfichable.

EP 0 105 177 B1

FIG. 1

FIG. 2

FIG. 3